# EUROPEAN PATENT SPECIFICATION

(11) **EP 0 954 968 B1**
(45) Date of publication and mention of the grant of the patent: **18.02.2004**
(21) Application number: 99610018.6
(22) Date of filing: 08.03.1999
(51) Int. Cl.: A01N 37/10, A01G 7/06

(54) **Treatment of top shoots (leaders) of trees of the family Picea and Abies**
Behandlung von Triebspitzen (Haupttriebe) von Bäumen aus den Familien Picea und Abies
Traitement des pousses (pousses principales) des arbres de la famille Picea et Abies

(30) Priority: 10.03.1998 DK 33098
(43) Date of publication of application: 10.11.1999
(73) Proprietor: Sorensen, Steen, 8340 Malling (DK)
(72) Inventor: Sorensen, Steen, 8340 Malling (DK)
(74) Representative: Nyeng, Joergen

(56) References cited:
- SUSAN BUDAVARI ET AL.: "An encyclopedia of chemicals, drugs, and biologicals" THE MERCK INDEX,1996, XP002900471 Twelfth Edition, page 1095, no. 6458; Merck & co. , Inc.
- EVA JANSSON ET AL.: "In vitro phyllomorphic regeneration of shoot buds and shoots in Picea abies" PHYSIOLOGIA PLANTARUM, vol. 49, 1980, XP002900472
- DATABASE WPI Section Ch, Week 7904 Derwent Publications Ltd., London, GB; Class A97, AN 79-06761B XP002900473 "Vegetable hormone contain adhesive tape - used to stimulate desired effect in plants etc. by applying to various parts of plant" & JP 53 142446 A (KYOWA FERMENTATION KK) , 12 December 1978
- DATABASE STN INTERNNATIONAL File CAPLUS, access. no. 1993:511191 KUNZE, I. ET AL.: "Continuous in vitro multiplication of shoot buds of Norway spruces (Picea abies L.) by intermittent application of gowth regulators" XP002900474 & BIOL. PLANT., vol. 35, no. 1, 1993, pages 11-15,
- DATABASE STN INTERNATIONAL File CAPLUS; access. no. 1969:522638 HEJNOWICZ, A. ET AL.: "Growth regulators and wood formation in Pinus silvestris" XP002900475 & PHYSIOL. PLANT, vol. 22, no. 6, 1969, pages 984-992,
- DATABASE STN INTERNATIONAL File CABA; access. no. 1998:117006 KONOVALOV, V.F. ET AL.: "Stimulation of the growth of tree species by synthetic auxin-like substance" XP002900476 & LESNOE KHOZYAISTVO, no. 1, 1997, pages 40-41,
- DATABASE STN INTERNATIONAL File BIOSIS; access. no. 98:136145 HINESLEY, L.E. ET AL.: "Effect of uniconazole on shoot growth and budset of containerized Fraser fir" XP002900477 & HORTSCIENCE, vol. 33, no. 1, 1988, pages 82-84,
- DATABASE STN INTERNATIONAL File BIOSIS; access. no. 87:274113 MAZZOLA, M. ET AL.: "Efficacy of BA for the promotion of lateral bud formation on douglas-fir and colorado blue spruce" XP002900478 & HORTSCIENCE, vol. 22, no. 2, 1987, pages 234-235,

## Description

The present invention relates to the regulation of the growth of top shoots (leaders) of trees belonging to the family Picea or Abies, in particular to a method for the treatment of such trees to reduce or even inhibit the growth of leader. The method comprises applying 1-naphthalene acetic acid (NAA) to the leader in a suitable concentration.

### BACKGROUND OF THE INVENTION

The normal (not controlled) growth of the leaders of the spruce trees implies that the distance between the whirls is increased from year to year. Especially, the last two years before the tree is cut down are very critical since the distance between the upper whirls may be increased heavily. If the tree is of a type suitable for use as Christmas tree, this may have the consequence that the tree cannot be sold as a such, or in the best case, can only be sold as second quality tree.

Ideally, the length of the leader must be 30-35 cm to produce a first quality tree. A second quality tree would have a leader of 35-50 cm. The length of the leader normally increases by 20%-50% each year, and the distance between the whirls are therefore increased relatively.

The growth of the leaders of spruce trees are in nature regulated by certain plant hormones, including the auxine group. For instance, indole acetic acid (IAA) formed in the tip of the shoots is involved in branching. From the journal Agrokhimiya 12, 96-102 (1990), it is known to regulate growth of buds of the branches of Pinus sylvestris by treating the buds with solutions of IAA, abscisic acid, gibberellic acid, and IAA and gibberellic acid for three years. It was shown that shoot extension growth was stimulated by the application of these phytohormones. Furthermore, it is known to stimulate the formation of pseudobulbils on the basal to mid-part of the needle axis, as well as their subsequent development into shoot buds and shoots using a media containing 6-benzylaminopurine and NAA (Physiol. Plant. 49(1), 105-111 (1980)).

As a commercial product, the Christmas tree is very important economically for forestry. For example, the export from Denmark of Abies nordmaniana increased from 1 million trees in 1980 to 6 million trees in 1995. It is estimated that the export will reach 15 million trees per year by the year of 2000.

It is important that the final product is of a quality that satisfies the consumers. Therefore, to ensure a high percentage of a suitable quality of Christmas trees, this invention is of crucial importance.

### FIELD OF THE INVENTION

The present invention relates to a method for the treatment of trees of the family Picea or Abies to regulate the growth of the leader of said tree, said method comprising application of 1-naphthalene acetic acid (NAA) to the leader in a suitable concentration at least once during the annual growth season.

Surprisingly, it has been found that the application of NAA to the leader of trees of the family Picea or Abies regulates the growth of said leader, whereby the yield of commercially interesting trees have been increased up ot 99%, of which first quality trees in average constitute 85%. By conventional forestry methods, a yield of 60% is achieved. Only approximately 50% of these trees are first quality trees.

### BRIEF DESCRIPTION OF THE FIGURES

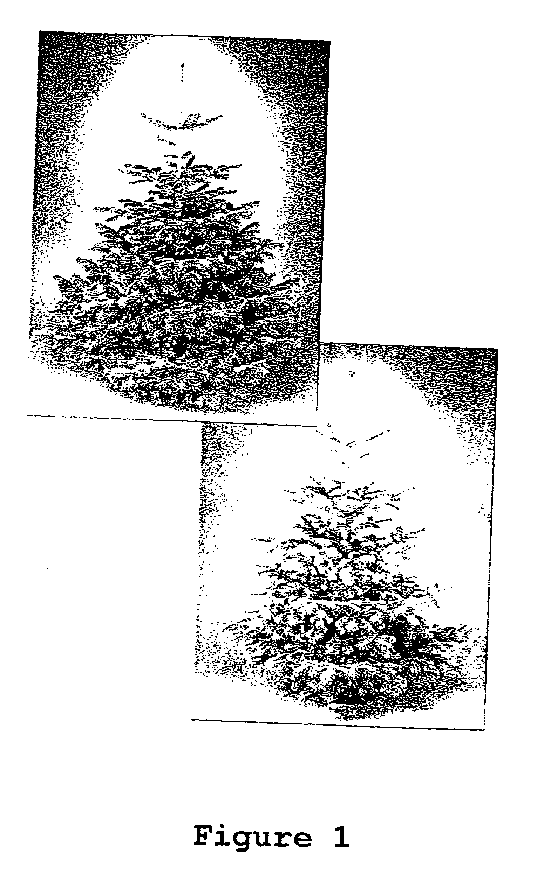

Figure 1 shows two first quality trees of the type A. nordmaniana.

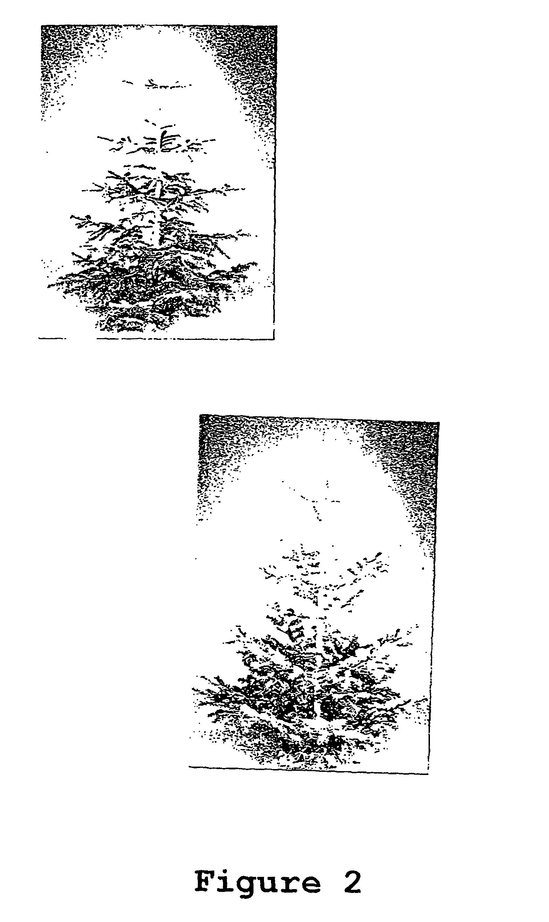

Figure 2 shows two second quality trees of the type A. nordmaniana.

Figure 3 shows the temporary bend leader sometimes observed after NAA treatment (above), and a straight leader after a recovering period (below). The trees are of the type A. nordmaniana.

### DETAILED DESCRIPTION OF THE INVENTION

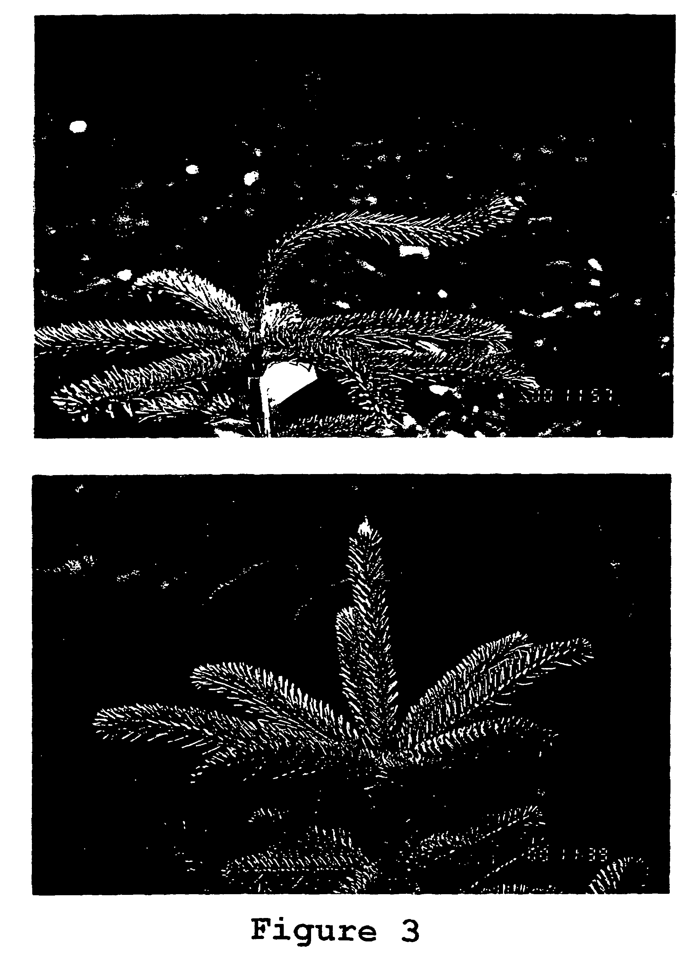

Trees of the before-mentioned family having a height of about 60 cm to about 3 metres corresponding to an age of approximately 4-15 years are used as Christmas trees. It has been found that treatment with NAA can be performed within this whole year span. The length of the leader at the time of application is suitably within the range of from about 9-20 cm, in particular from about 10-18 cm, in particular from about 10-15 cm. In case of trees with strong (fast) growth and older trees, application is preferably performed on leaders being shorter (the lower end of the interval). Concerning slower growing and younger trees, application is preferably performed on longer leaders (the upper end of the interval). This is explained by the fact, that younger trees naturally do not grow as fast as older trees, and that the effect is stronger by treatment of shorter leaders as compared to longer leaders. If leaders have a length of more than 20 cm at the time of the first application, there is a risk of said leaders being bend. Approximately 24 hours after application, the relatively soft leaders may bend, as much as up to an angle of 90° relative to the direction of growth, or it may form an S (see Figure 3). It is possible that the weight of long bende leaders causes an inability for the plant to back-regulate the erected position. However, the bending is also observed on leaders shorter than 20 cm. In these cases, the shoot is able to straighten out again.

NAA is used in a concentration ranging from about 0.01% weight% to about 0.1% weight%, preferably from about 0.01% weight% to about 0.06% weight%, more preferably from about 0.01% weight% to about 0.04% weight%, and most preferably from about 0.01% weight% to about 0.025% weight%.

In a preferred embodiment, the concentration of NAA ranging from about 0.0112% weight% to about 0.03375% weight%, preferably about 0.0225% weight%.

In a preferred embodiment, NAA is applied to the leader once during the annual growth season. However, the leader may be treated more than once. It has been shown that treating the leader twice during the annual growth seasom may be advantageous. The leader may thus be treated once with NAA in a concentration indicated above, and subsequently with the same concentration when the leader is about 3-5 cm shorter than desired. Thus, a second treatment is used when inhibition of further growth is wanted or needed.

To facilitate application, NAA is suitable dissolved in a suitable vehicle or solvent. The vehicle or solvent must have a pH value that keeps NAA in its active form. Also, the vehicle or solvent must be able to present NAA in its active form to the needles of the stem of the leader. NAA may be used alone or in combination with other additives such as a marker or a buffer system. Preferably, an amount of about 5-15 ml of the NAA solution in concentrations as indicated above is applied to the leader, depending on the length of the soot. It is important that at least the uppermost 2/3 of the leader is covered with the solution or agent. To ensure that each tree receives a sufficient NAA, the agent may suitably be applied to the shoot until saturation or "dripping off". That is, until all needles are covered with the agent. Experimental data seem to indicate that excess agent running down the central stem is of minor importance.

In addition to said formulation mentioned above, other formulations may also be used. NAA may e.g. be used in combination with various binding agents such as waxes, cellulose compounds, glue and other agents that promote adherence of NAA to the target area. Additionally, the formulation may contain an indicator or marker making it possible to distinguish treated trees from not treated trees. Examples are chemical colouring substances, paint, natural colours and fluorescent agents.

When applying the agent to the leader, care should be taken to ensure that only the leader is treated. Due to the smaller diameter and mass of the shoots, the underlying branches are more sensitive towards NAA. Thus, the effect of spraying the underlying branches during the treatment may induce damage on said branches. This can be accomplished by shielding off the leader during application of NAA.

Application of NAA is preferably carried out by spraying the agent onto the shoot to be treated. To obtain an even distribution of the agent, a spraying device having relatively small nozzles may preferably be used. For instance, a "Hardi" 10 Or 12 spray obtained from Hardi Landbrugssprøjter, Denmark, has been used with optimum results. A device has been developed by the inventor, said device comprising a spraying screen having two nozzles. The use of this device ensures that both sides of the leader are treated simultaneously, at the same time shielding the upper whirl against the solution. The agent may be applied at a pressure of about 1-2 bar, particularly 1.5 bar.

The treatment is preferably performed in the growing season, i.e. from late Spring and during the Summer period, depending of the location, climate, species and origin. The species of trees to be treated belong to Picea spp. and Abies spp. such as P. abies, P. glauca, P. amorica, A. nordmaniana, A. procera, A. koreana, A. concolor, A. bornmülleriana, A. fraseri, A. magnifica, A. magnifica var. shastensis, A. balsamea, A. grandis var. lowiana and A. grandis.

The following examples are intended to further illustrate the invention, not to limit the scope.

### EXAMPLES

Leaders of Picea nordmaniana (being in average 7 years old, having a height ranging from 1 to 1.80 metres) were treated with a solution of NAA (Obstformon 24A with a NAA concentration of 7.5% obtained from Eduard Gerlach GmbH) by spraying. The NAA concentration used were 0.0225% weight% (3 ml Obsthormon 24A with a NAA concentration of 7.5%, to 1 litre water), 0.01125% weight%, 0.045% weight% and 0.0675% weight%, respectively. The solution was applied using a device comprising a screen and a spray having two nozzles. The solution was applied on both sides of the leader at the same time in order to ensure even distribution of the solution, at the same time shielding off the closest underlying branches.

The solution was applied either once or twice as indicated in the Tables 1 to 6 below. The time of application is also shown. The length of the leaders was measured before and after application. For comparison purposes, the length and growth of untreated leaders is indicated in Table 7 below.

In the Tables, stage 1 denotes leaders having needles which are lying close to the stem of the leader. Stage 2 denotes leaders on which the tips of the needles are beginning to point away from the stem of the leader. Stage 3 denotes leaders on which the tips of the needles are pointing away from the stem of the leader maximally (typically in an angle of 45°), and stage 4 denotes leaders on which distance between needles has developed.

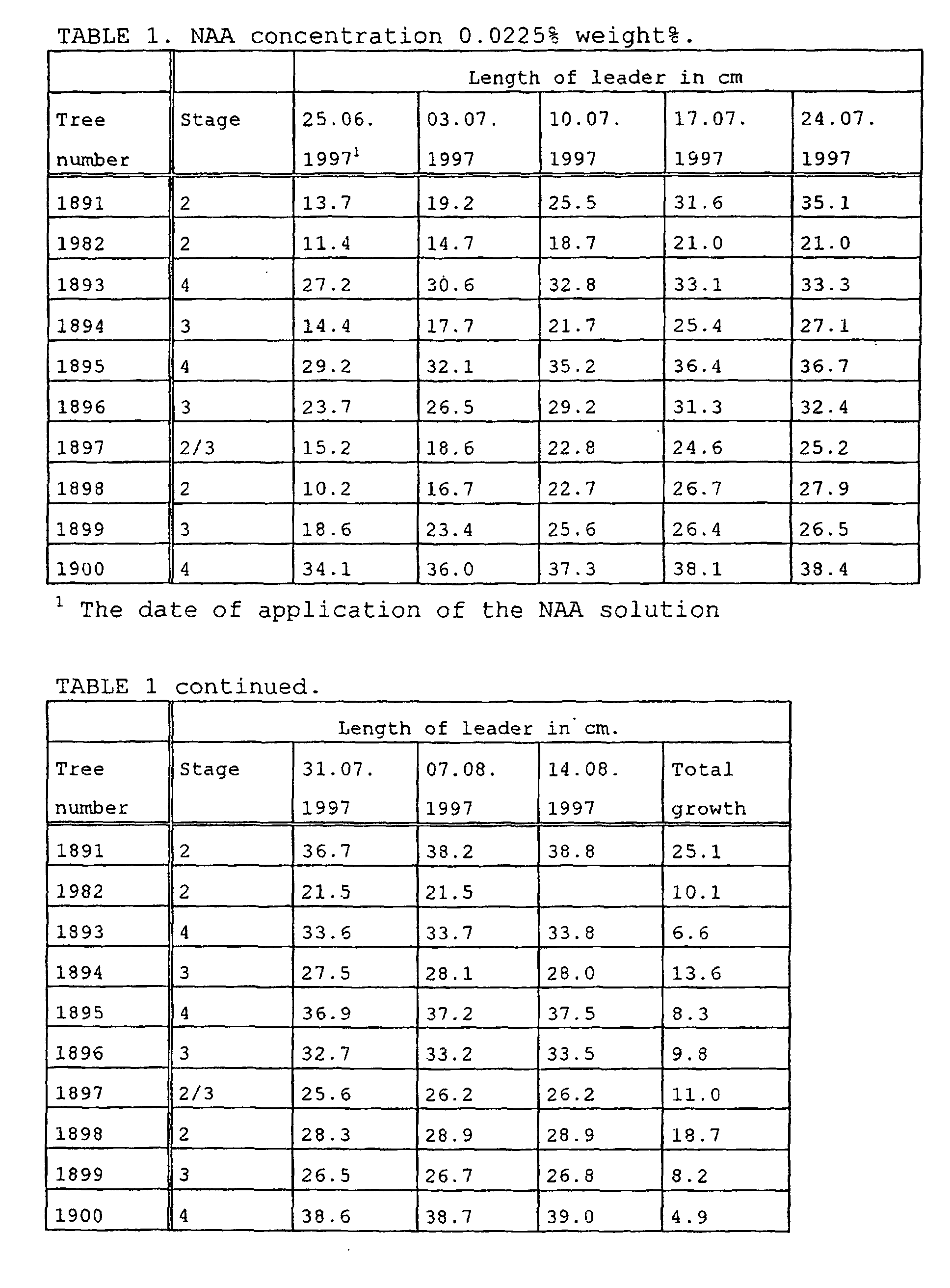

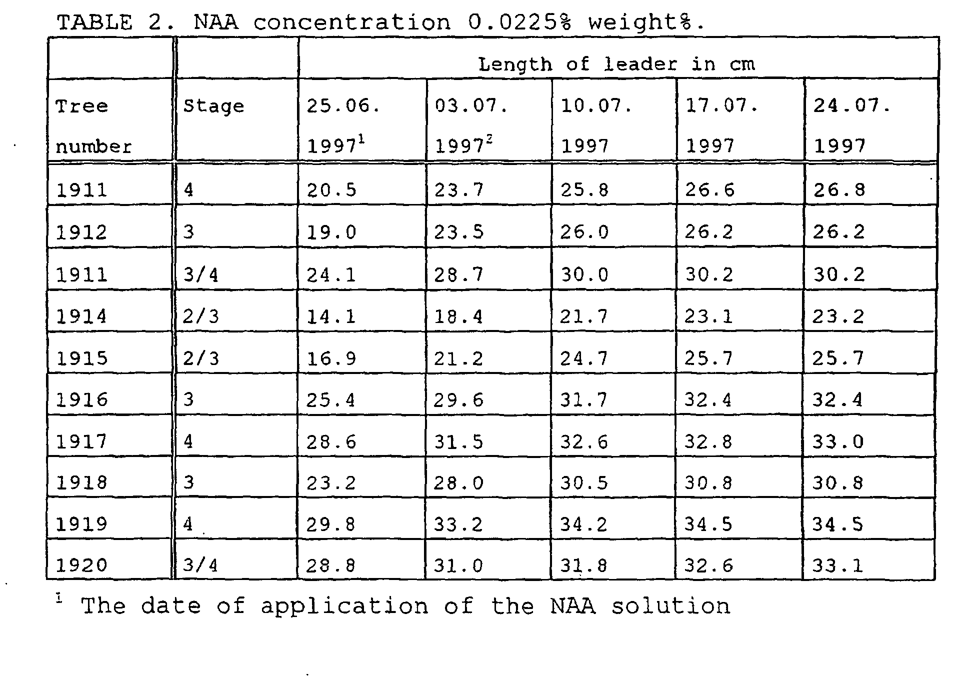

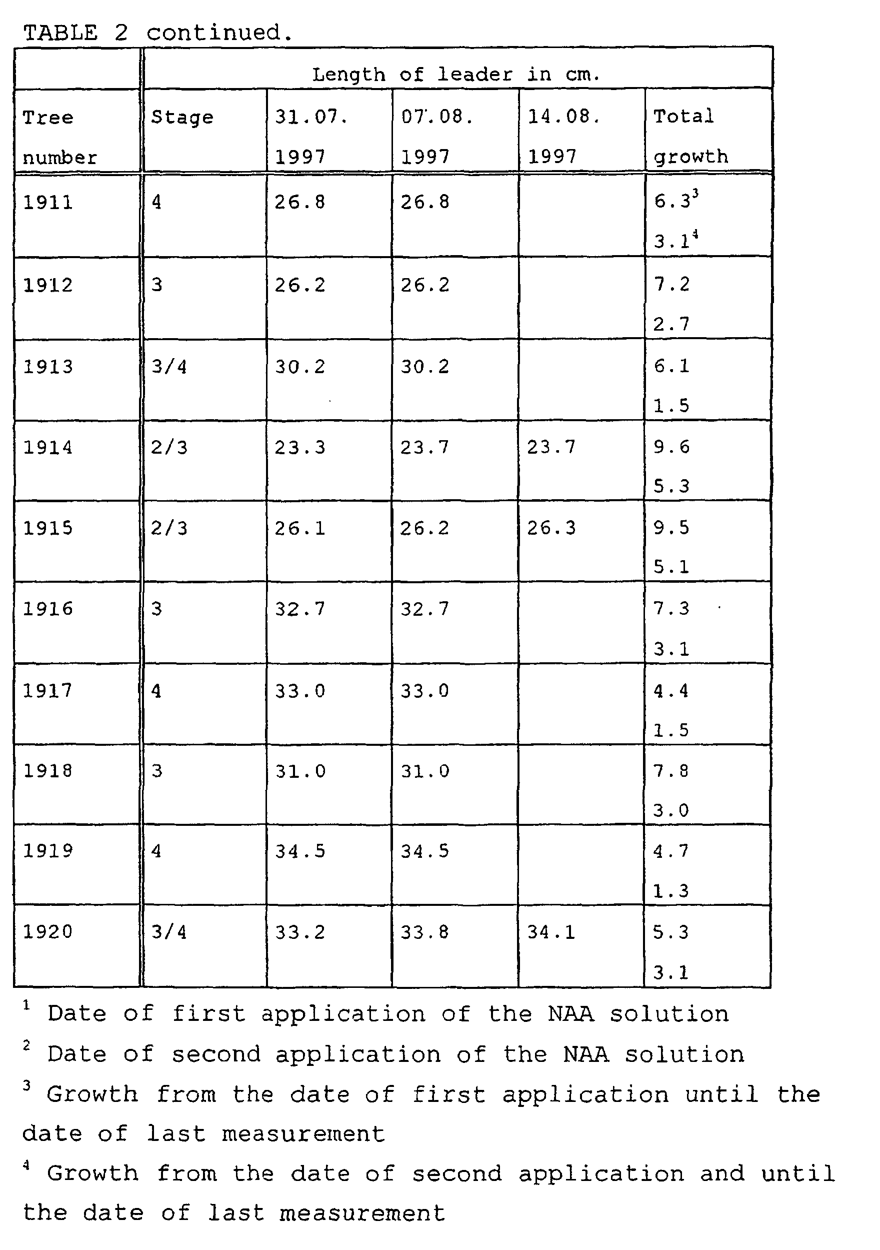

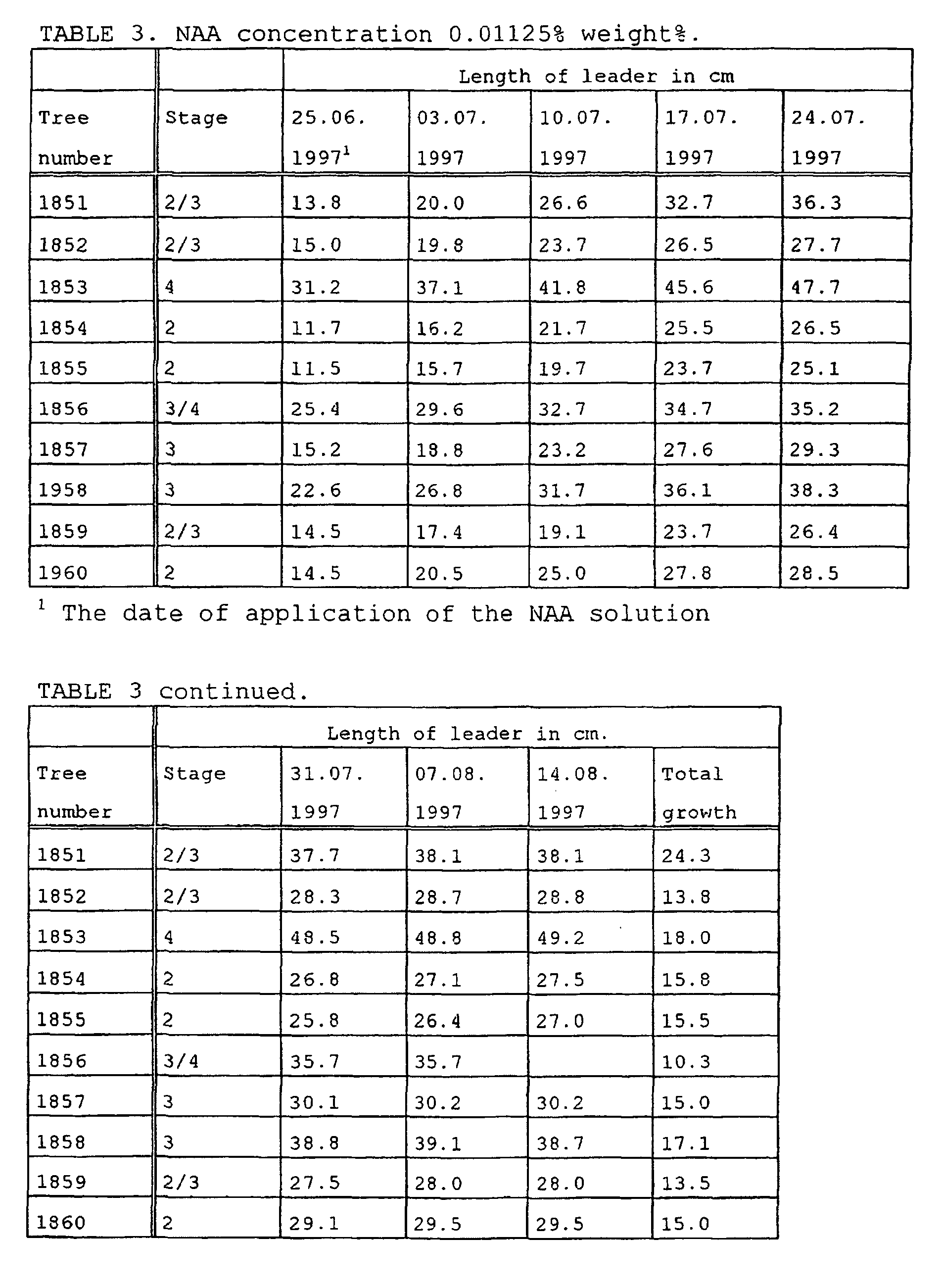

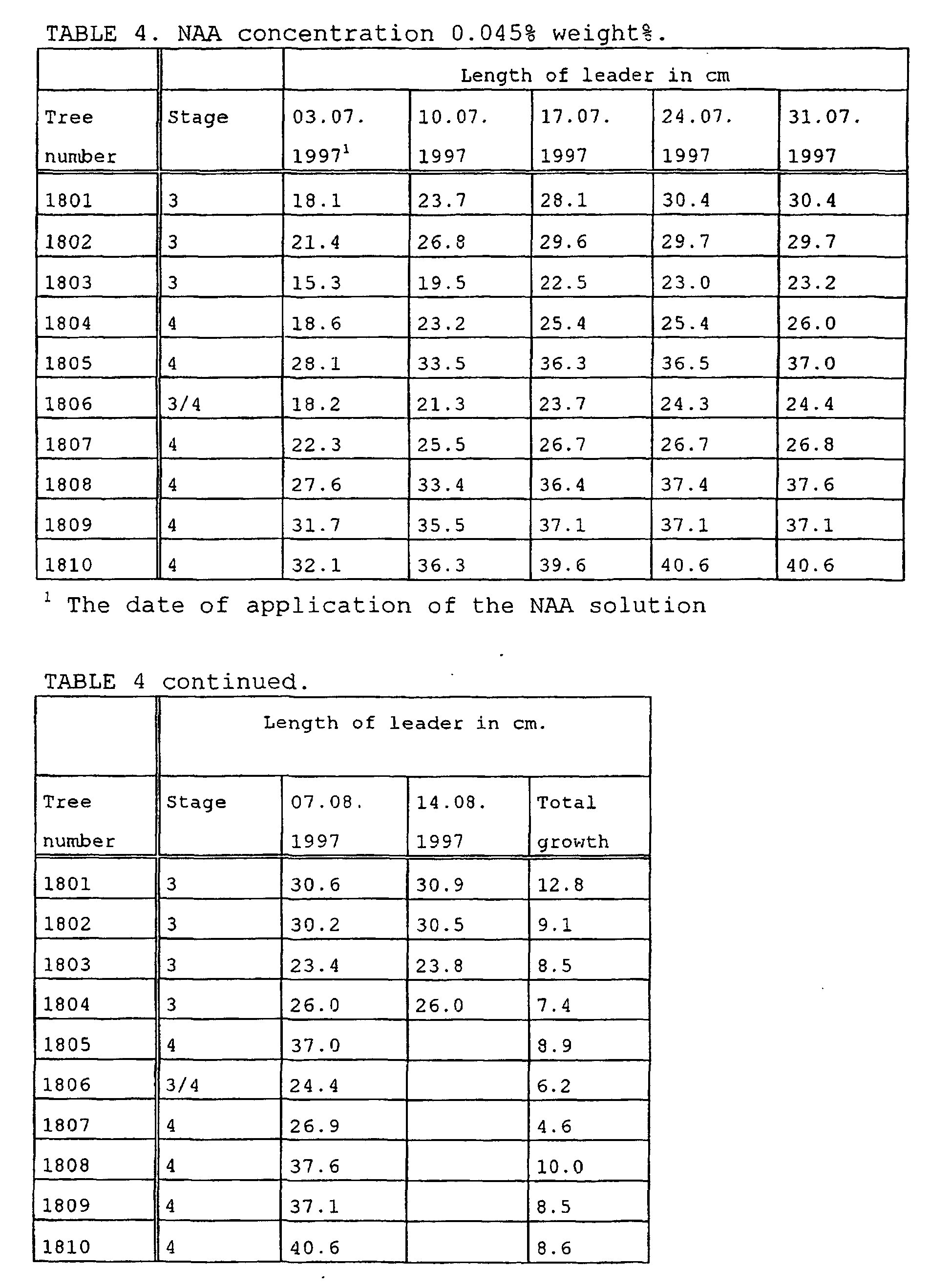

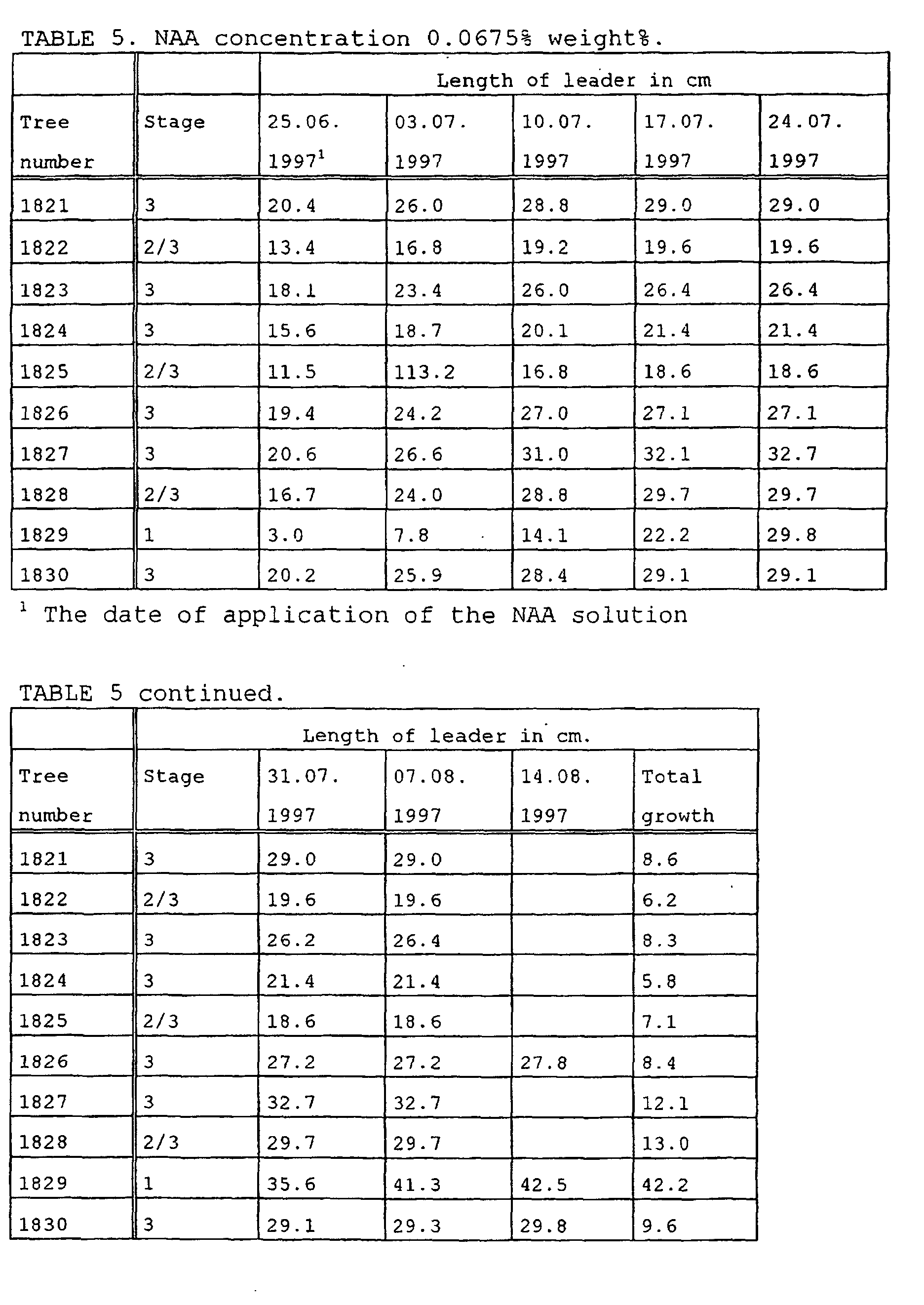

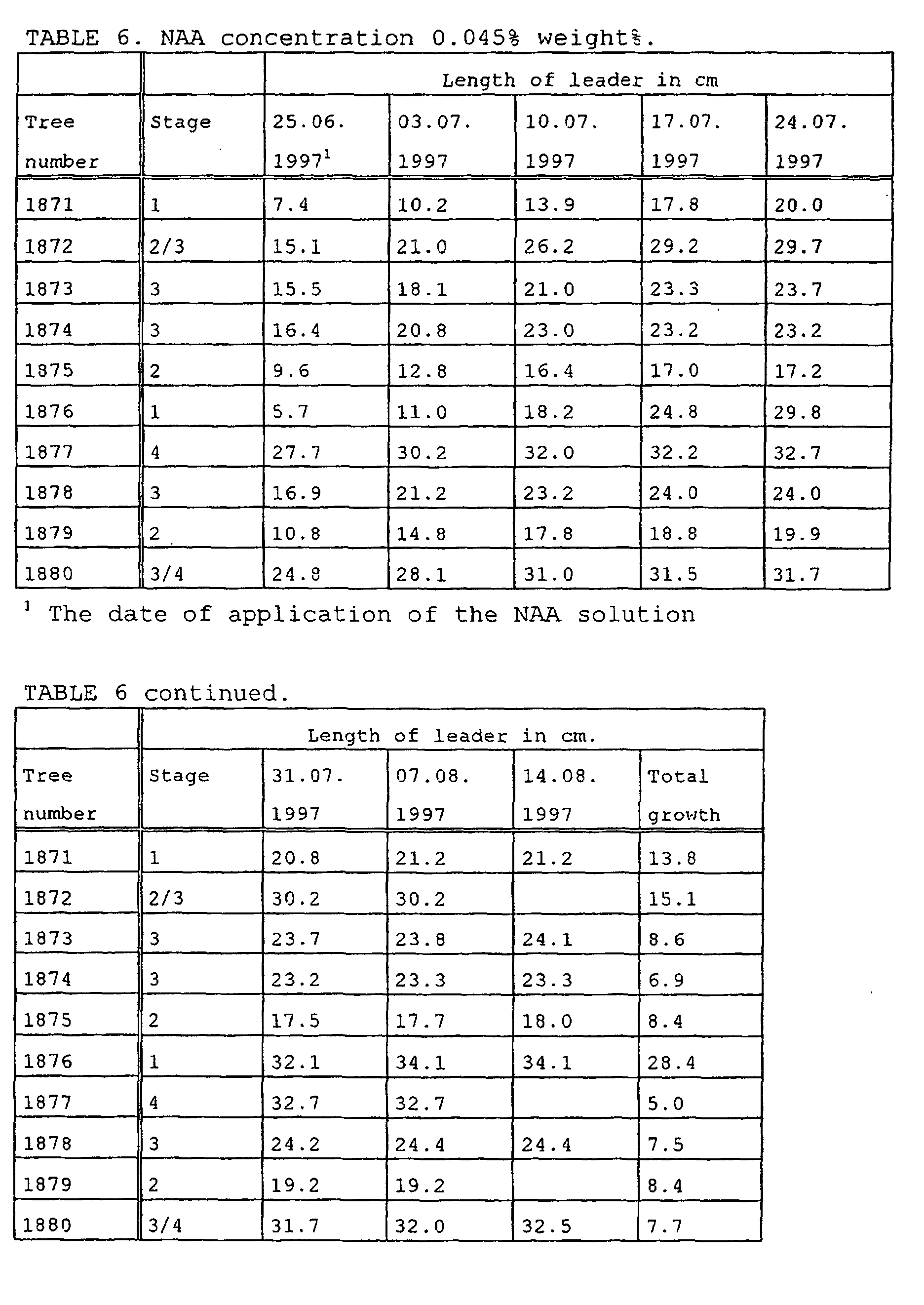

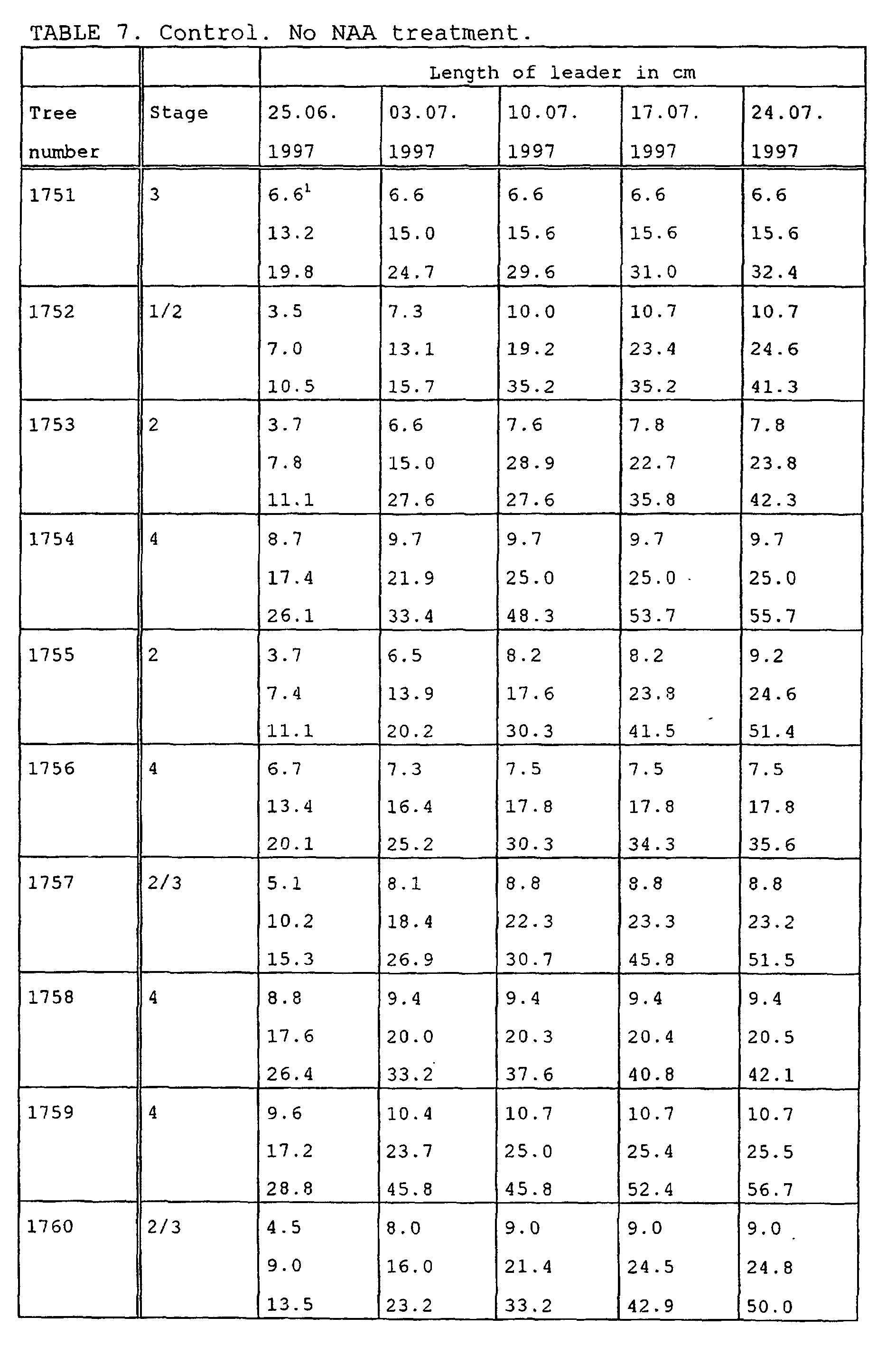

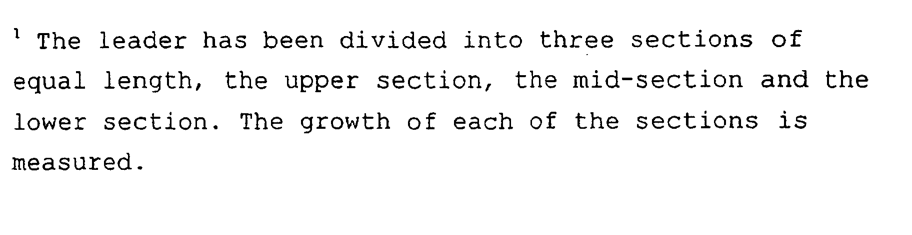

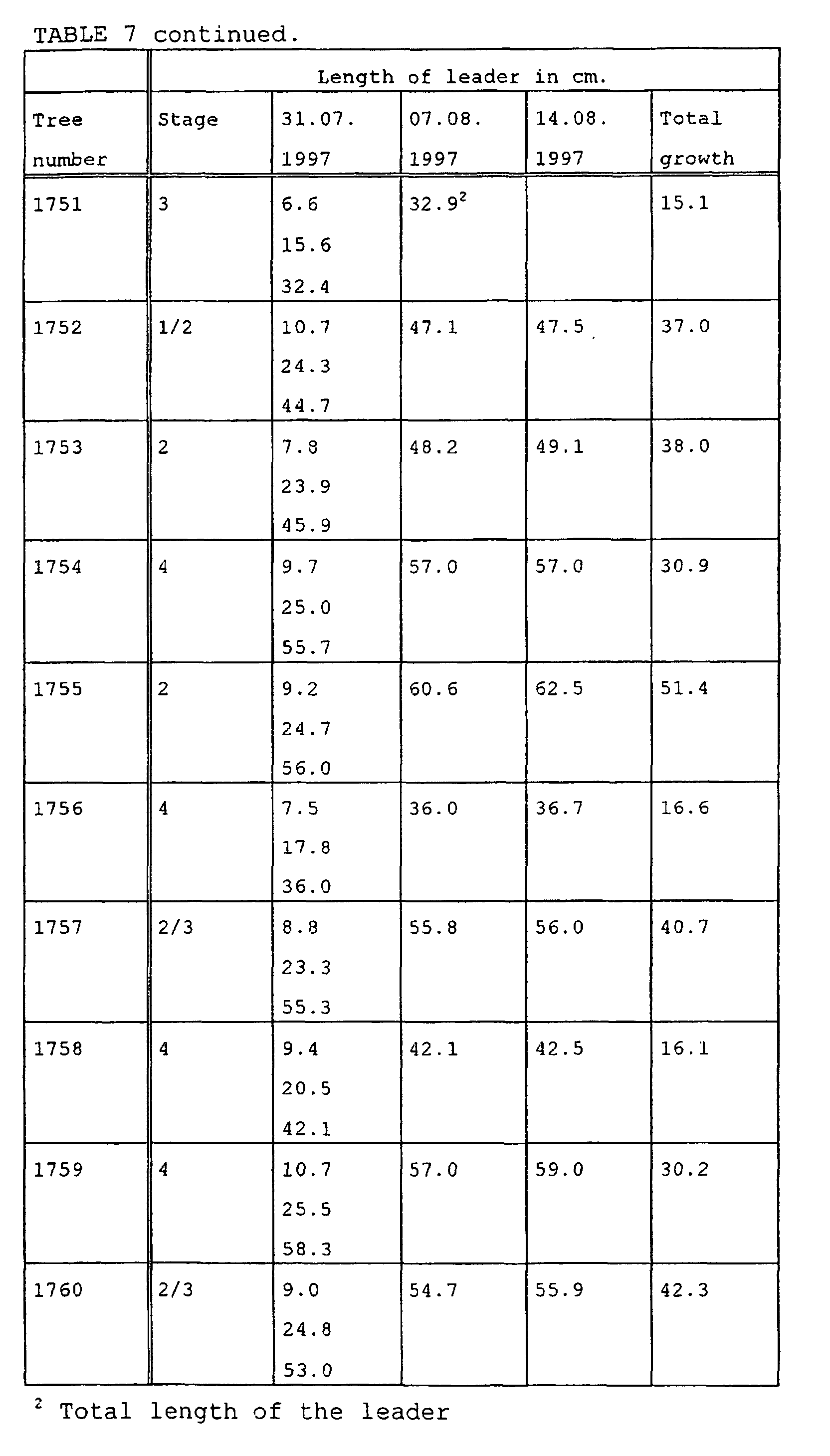

From the Tables, it is clear that treatment of the leaders having a length as suggested herein gives the best results. The results shown in Tables 1-6 clearly demonstrate the potential of the present invention; i.e. the growth of the leader can be regulated. Treatment of the leader with a suitable NAA concentration thus enhance the percentage of first quality trees. This is clearly seen comparing the results of Tables 1-6 with the results of Table 7.

## Claims

1. Method for the treatment of trees of the family Picea or Abies to regulate the growth of the top shoot (leader) of said trees, comprising application to the leader of 1-naphthalene acetic acid (NAA) in a suitable concentration at least once during the annual growth season.

2. Method according to claim 1, wherein the length of the leader at the time of application is between about 9-20 cm, preferably 10-15 cm.

3. Method according claim 1 or 2, wherein the concentration of NAA in a suitable vehicle is in the range of from about 0.01% weight% to about 0.1% weight%, preferably from about 0.01% weight% to about 0.06% weight%, more preferably from about 0.01% weight% to about 0.04% weight%, and most preferably from about 0.01% weight% to about 0.025% weight%.

4. Method according to any one of claims 1-3, wherein the concentration of NAA is in the range of from about 0.0112% weight% to about 0.03375% weight%, preferably about 0.0225% weight%.

5. Method according to any one of claims 1-4, wherein NAA is used in combination with a suitable marker.

6. Method according to any one of claims 1-5, wherein 5-15 ml of a solution of NAA having a concentration as indicated in claim 3 or 3 is applied to at least the uppermost 2/3 of the leader.

7. Method according to any one of claims 1-6, wherein NAA is applied once during the annual growth season.

8. Method according to any one of claims 1-6, wherein NAA is applied twice during the annual growth season.

9. Method according to any one of claims 1-8, wherein the tree to be treated is selected from Picea spp. and Abies spp. such as P. abies, P. glauca, P. amorica, A. nordmaniana, A. procera, A. koreana, A. concolor, A. bornmülleriana, A. fraseri, A. magnifica, A. magnifica var. shastensis, A. balsamea, A. grandis var. lowiana and A. grandis.

## Patentansprüche

1. Verfahren zur Behandlung von Bäumen der Familie Picea oder Abies, um das Wachstum der Triebspitze (Haupttrieb) von besagten Bäumen zu regulieren, umfassend die Anwendung von 1-Naphthalinessigsäure (NES) auf den Haupttrieb in einer geeigneten Konzentration mindestens einmal während der jährlichen Wachstumssaison.

2. Verfahren gemäß Anspruch 1, worin die Länge des Haupttriebs zum Zeitpunkt der Anwendung zwischen ungefähr 9 - 20 cm, vorzugsweise 10 - 15 cm beträgt.

3. Verfahren gemäß Anspruch 1 oder 2, worin die Konzentration an NES in einem geeigneten Bindemittel in dem Bereich von ungefähr 0,01 Gew.-% bis ungefähr 0,1 Gew.-%, vorzugsweise von ungefähr 0,01 Gew.-% bis ungefähr 0,06 Gew.-%, mehr bevorzugt von ungefähr 0,01 Gew.-% bis ungefähr 0,04 Gew.-% und am meisten bevorzugt von ungefähr 0,01 Gew.-% bis ungefähr 0,025 Gew.-% liegt.

4. Verfahren gemäß einem der Ansprüche 1 - 3, worin die Konzentration an NES in dem Bereich von ungefähr 0,0112 Gew.-% bis ungefähr 0,03375 Gew.-%, vorzugsweise bei ungefähr 0,0225 Gew.-% liegt.

5. Verfahren gemäß einem der Ansprüche 1 - 4, worin NES in Kombination mit einem geeigneten Marker verwendet wird.

6. Verfahren gemäß einem der Anspruche 1 - 5, worin 5 - 15 ml einer Lösung von NES mit einer Konzentration, wie sie in Anspruch 3 oder 4 angezeigt wird, auf mindestens die oberen 2/3 des Haupttriebs angewendet wird.

7. Verfahren gemäß einem der Ansprüche 1 - 6, worin NES einmal während der jährlichen Wachstumssaison angewendet wird.

8. Verfahren gemäß einem der Ansprüche 1 - 6, worin NES zweimal während der jährlichen Wachstumssaison angewendet wird.

9. Verfahren gemäß einem der Anspruch 1 - 8, worin der zu behandelnde Baum aus Picea spp, und Abies spp. wie P. ables, P. glauca, P. amorica, A. nordmaniana, A. procera, A. koreana, A. concolor, A. bornmülleriana, A. fraseri, A. magnifica, A. magnifica var. shastensis, A. balsamea, A. grandis var. lowiana und A. grandis ausgewählt ist.

## Revendications

1. Procédé de traitement des arbres de la famille Picea ou Abies pour réguler la croissance de la pousse apicale (maîtresse) desdits arbres, comprenant l'application à la pousse apicale d'acide acétique 1-naphtalène (NAA) en une concentration appropriée au moins une fois pendant la saison de croissance annuelle.

2. Procédé selon la revendication 1, dans lequel la longueur de la pousse apicale, au moment de l'application, est comprise entre environ 9-20 cm, de préférence 10-15 cm.

3. Procédé selon la revendication 1 ou 2, dans lequel la concentration en NAA dans un véhicule approprié est comprise dans le domaine allant d'environ 0,01 % en poids à environ 0,1 % en poids, de préférence allant d'environ 0,01 % en poids à environ 0,06 % en poids, de préférence encore allant d'environ 0,01 % en poids à environ 0,04 % en poids, et encore de préférence allant d'environ 0,01 % à environ 0,025 % en poids.

4. Procédé selon l'une quelconque des revendications 1-3, dans lequel la concentration en NAA est comprise dans le domaine allant d'environ 0,0112 % en poids à environ 0,03375 % en poids, de préférence environ 0,0225 % en poids.

5. Procédé selon l'une quelconque des revendications 1-4, dans lequel le NAA est utilisé en combinaison avec un marqueur approprié.

6. Procédé selon l'une quelconque des revendications 1-5, dans lequel 5-15 ml d'une solution de NAA ayant une concentration telle qu'indiquée à la revendication 3 ou 4 sont appliqués à au moins les 2/3 de la partie supérieure de la pousse apicale.

7. Procédé selon l'une quelconque des revendications 1-6, dans lequel le NAA est appliqué une fois pendant la saison de croissance annuelle.

8. Procédé selon l'une quelconque des revendications 1-6, dans lequel le NAA est appliqué deux fois pendant la saison de croissance annuelle.

9. Procédé selon l'une quelconque des revendications 1-8, dans lequel l'arbre à traiter est choisi parmi Picea spp. et Abies spp. tel que P. abies, P. glauca, P. amorica, A. nordmaniana, A. procera, A. koreana, A. concolor, A. bornmülleriana, A. fraseri, A. magnifica, A, magnifica var. shastensis, A. balsamea, A. grandis var. lowiana et A. grandis.
